(19) Europäisches Patentamt
European Patent Office
Office européen des brevets

(11) Publication number: **0 017 751**
**A1**

(12) **EUROPEAN PATENT APPLICATION**


(21) Application number: **80101180.0**

(22) Date of filing: **07.03.80**

(51) Int. Cl.³: **C 08 G 81/02**, C 08 L 71/04, C 08 L 25/04, C 08 L 25/16, C 08 K 3/06, C 08 K 3/30, C 08 K 3/36, C 08 K 5/37, C 08 K 5/38, C 08 K 5/40, C 08 K 5/43

(30) Priority: **08.03.79 JP 27435/79**

(43) Date of publication of application: **29.10.80**
**Bulletin 80/22**

(84) Designated Contracting States: **BE DE FR GB IT NL**



(71) Applicant: **SUMITOMO CHEMICAL COMPANY LIMITED, 15 Kitahama 5-chome Higashi-ku, Osaka-shi Osaka-fu (JP)**

(72) Inventor: **Maruyama, Takashi, 11-8-208, Sonehigashimachi-2-chome, Toyonaka-shi (JP)**
Inventor: **Ueno, Katsuji, 17-20, Hirakatakaminocho, Hirakata-shi (JP)**

(74) Representative: **Vossius-Vossius-Tauchner-Heunemann-Rauh Patentanwälte, P.O.Box 860767 Siebertstrasse 4, D-8000 München 86 (DE)**


(54) **Process for the production of graft copolymers of polyphenylene oxides.**


(57) A process for producing a graft copolymer characterized by melt-blending 100 parts by weight of a resin mixture comprising 90 to 10% by weight of a polyphenylene oxide having a structurel unit of

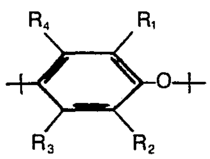

(wherein $R_1$, $R_2$, $R_3$ and $R_4$ each represents hydrogen, a halogen atom, a hydrocarbon or substituted hydrocarbon radical) and 10 to 90% by weight of a styrene polymer and/or a copolymer of a styrene and other monomers in the presence of 0.01 to 5 parts by weight of a sulfurcontaining grafting agent selected from the group consisting of sulfur, sulfur halogenides, sulfides, thiols and thiophenols.


EP 0 017 751 A1

This invention relates to a process for producing a graft copolymer comprising a polyphenylene oxide and a styrene polymer as constitutional ingredients and containing no ungrafted polyphenylene oxide.

Although polyphenylene oxides are known to be resins excellent in heat resistance, mechanical and electrical properties, etc., they have the disadvantage of inferior processability owing to, for example, the high softening point and low fluidity inherent in polyphenylene oxides.

A number of techniques have been proposed to improve the processability of polyphenylene oxides. For instance one method has been disclosed in which a polyphenylene oxide is blended with a styrene polymer and another method in which a styrene is grafted onto a polyphenylene oxide; see Japanese Patent Publication Nos. 17,812/1968 and 47,862/1972, respectively.

To modify a resin graft copolymerization is generally advantageous over blending from the aspect of compatibility of components of the resins. Graft copolymerization, on the other hand, has the commercial disadvantage of requiring a polymerizer and other equipment for grafting. To simultaneously solve the above-noted problems Japanese Patent Application Kokai "Laid-open" No. 142,799/1977 proposes a method in which a

polyphenylene oxide and a styrene polymer are blended in a molten state in the presence of a peroxide.

In the case of the above method, however, a high degree of grafting is not attained unless a comparatively large amount of peroxide is used. The use of a large amount of peroxide entails an increase in the production cost, a danger of explosion during the operation, and retention in the resin of residual decomposition products of the peroxide, which result in a decrease in softening point of the resin as well as causing silver streaks and foaming in the molded articles. For this reason a further improvement is required for the method to be of practical use.

Under the circumstances, the present inventors endeavoured to find a commercially feasible simple process for producing a practically useful molding material excellent in moldability and capable of yielding molded acticles having excellent appearance and, when injection-molded, producing an article which exhibits minimum anisotropy. As a result, it has been found that the desired object can be achieved by blending a molten mixture of a polyphenylene oxide and a styrene polymer in the presence of small amounts of compounds herein specified.

An object of this invention is to provide a process for producing a polymer comprising a polyphenylene oxide grafted with a styrene polymer.

Another object of this invention is to provide a process for producing a graft copolymer having excellent

thermal properties and exhibiting little anisotropy on being molded.

Other objects and advantages of this invention will become apparent from the following description.

This invention provides a commercially advantageous process for producing a graft copolymer containing substantially no ungrafted polyphenylene oxide, which comprises blending 100 parts by weight of a molten resin mixture comprising 90 to 10% by weight of a polyphenylene oxide or a copolymer comprising polyphenylene oxide as major component and 10 to 90% by weight of a styrene polymer in the presence of 0.01 to 5 parts by weight of a grafting agent selected from the group consisting of sulfur, sulfides, thiols and thiophenols. According to this invention, there is produced advantageously on a commercial scale a graft copolymer containing substantially no ungrafted polyphenylene oxide by the simple milling of a resin mixture admixed with a small amount of a specified compound.

The polyphenylene oxide used in the present process is a polymer with recurring constitutional units of the general formula

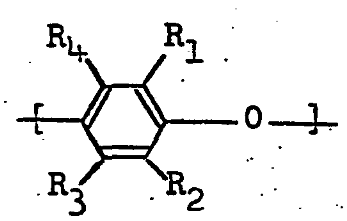

wherein $R_1$, $R_2$, $R_3$ and $R_4$ each represents hydrogen, a halogen atom, a hydrocarbon or substituted hydrocarbon radical.

Examples of the substituents $R_1$, $R_2$, $R_3$ and $R_4$ are atoms and groups such as hydrogen, chlorine, bromine, iodine, methyl, ethyl, propyl, allyl, phenyl, tolyl, benzyl, chlorophenyl, bromophenyl, methylbenzyl, chloromethyl and bromomethyl.

Examples of particular polyphenylene oxides having the unit structure of the above formula include poly(2,6-dimethyl-1,4-phenylene oxide), poly(2-methyl-1, 4-phenylene oxide), poly(3-methyl-1,4-phenylene oxide), poly(2,6-diethyl-1,4-phenylene oxide), poly(2,6-dipropyl-1,4-phenylene oxide), poly(2-methyl-6-allyl-1,4-phenylene oxide), poly(2,6-dichloromethyl-1,4-phenylene oxide), poly(2,3,6-trimethyl-1,4-phenylene oxide), poly(2,3,5,6-tetramethyl-1,4-phenylene oxide), poly(2,6-dichloro-1, 4-phenylene oxide), poly(2,6-diphenyl-1,4-phenylene oxide), and poly(2,5-dimethyl-1,4-phenylene oxide).

Copolymers having the unit structure of the above formula can also be used. Examples of such copolymers include copolymers of 2,6-disubstituted phenols with 2,4-disubstituted phenols, copolymers of 2,6-disubstituted phenols with 2,3,6-trisubstituted phenols, and copolymers of 2,6-disubstituted phenols with 2-substituted phenols, 3-substituted phenols or 4-substituted phenols.

It is also possible to use various modified polyphenylene oxides formed by grafting vinyl monomers such as, for example, styrene, ethylene, and methyl methacrylate onto polyphenylene oxides having the unit

structure of the aforementioned general formula.

The polyphenylene oxide used in this invention has a number-average polymerization degree selected preferably from the range of from 60 to 250.

The styrene polymers, as herein referred to, include polymers of styrenes and copolymers of styrenes with other monomers. The polymers of styrenes include homopolymers of aromatic alkenyl compounds or copolymers of two or more aromatic alkenyl compounds. Examples of individual aromatic alkenyl compounds are styrene, chlorostyrene, dichlorostyrene, p-methoxystyrene, p-nitrostyrene, p-methylstyrene, p-phenylstyrene, p-acetoxystyrene, p-hydroxystyrene, m-hydroxystyrene, p-divinylbenzene, aminostyrene, chloromethylstyrene and α-methylstyrene. The copolymers of styrene with other monomers include copolymers of one or more aromatic alkenyl compounds with vinyl monomers other than aromatic alkenyl compounds and/or diene monomers.

The styrene content of the copolymer is preferably at least 10% by weight.

Examples of vinyl monomers and diene monomers other than aromatic alkenyl compounds include those copolymerizable with styrenes, such as ethylene, propylene, vinyl chloride, methyl methacrylate, methyl acrylate, acrylonitrile, butadiene, isoprene, maleic anhydride, isobutylene, and vinyl acetate. These monomers can be used in combinations of two or more.

As sulfur-containing grafting agent used in

the present invention any type of sulfur may be used (e.g. powdery sulfur, flowers of sulfur, precipitated sulfur, colloidal sulfur, surface-treated sulfur, insoluble sulfur, mixtures of sulfur with small amounts of carbon black or magnesium carbonate), sulfur halogenides (e.g. sulfur monochloride, sulfur dichloride), sulfides [e.g. monosulfides such as 4,4'-thio-bis-(6-t-butyl-2-methyl phenol), 4,4'-thio-bis-(2-methyl phenol), 2,2'-thio-bis-(6-t-octyl-4-methyl phenol), tetramethyl thiuram monosulfide and di-pentamethylene thiuram monosulfide, disulfides such as morpholine disulfide, tetramethyl thiuram disulfide, tetraethyl thiuram disulfide, tetrabutyl thiuram disulfide, dimethyl diphenyl thiuram disulfide, a $C_1$-$C_{12}$ alkyl phenol disulfide, dipentamethylene thiuram disulfide, dibutyl xantogen disulfide, 0,0'-dibenzamide diphenyl disulfide, dibenzothiazyl disulfide, dithio-bis-(nitrobenzoic acid), dithiodipyridine, dithiobenzoic acid and cystine, tetrasulfides such as dipentamethylene thiuram tetrasulfide], thiols [e.g. ethane dithiol, propane dithiol, butane dithiol, cysteine, mercaptobenzoimidazol, mercaptobenzothiazol, mercaptothiazoline, salts of metals (e.g. zinc, copper) therewith] and thiophenols [e.g. pentachloro thiophenol, thiophenol, salts of metals (e.g. zinc, copper) therewith]. These can be used singly or in combination. Among these, sulfur is most preferred in view of the high graft efficiency of copolymer obtained.

The mixing ratio of polyphenylene oxide and

styrene polymer used in this invention is 90 to 10, preferably 75 to 25% by weight of the former to 10 to 90, preferably 25 to 75% by weight of the latter. If the polyphenylene oxide exceeds 90% by weight, the resulting graft copolymer is hardly improved in processability, and, in addition, a fairly large amount of polyphenylene oxide remains ungrafted, while if the polyphenylene oxide is below 10% by weight, the graft copolymer will lose the heat resistance characteristic of the polyphenylene oxide.

According to this invention the sulfur-containing grafting agent is used in an amount of 0.01 to 5, preferably 0.05 to 3 parts by weight for 100 parts by weight of the mixture of polyphenylene oxide and styrenene polymer. If the amount is below 0.01 part by weight a fairly large amount of polyphenylene oxide remains ungrafted, while if the amount exceeds 5 parts by weight an undesirable gel-like polymer tends to form.

According to this invention a polyphenylene oxide, a styrene polymer and a sulfur-containing grafting are intermixed by melt-blending. Although the melt-blending temperature can be any temperature at which the mixture of polyphenylene oxide and styrenene polymer may melt, too high a temperature tends to cause deterioration of the resin. In view of this, a desirable temperature range is from 13C° to 300°C, preferably from 180° to 300°C. The blending equipment can be any equipment capable of treating a high viscosity melt. Both

batch and continuous systems can be used. Examples of such equipment include the extruder, kneader, Banbury mixer, mixing roll and internal mixer. The melt-blending time is not critical but is usually 20 seconds to 30 minutes, preferably 1 to 20 minutes.

Unless the grafting reaction is hindered, it is possible to add to the reaction system other substances such as known vulcanization-activators and accelerators, known stabilizers, other polymers, glass fiber, carbon fiber, plasticizers, pigments, carbon black, titanium white, silica and other inorganic fillers, flame retardants, etc. Examples of individual substances are as described in "Hand-book of Compounding Chemicals for Rubbers and Plastics" (Rubber Digest Co., Ed.; published June 15, 1966).

The addition of a vulcanization-activator or accelerator is desired to accelerate the grafting reaction, in other words, the use of these compounds makes blending time shorter, blending temperature lower and the amount of grafting agent used smaller. The vulcanization-activators or accelerators are those conventionally used for the vulcanization of diene rubbers other than the grafting agents defined in the present invention. As vulcanization-activator may be used stearic acid, zinc oxide, magnesium oxide and lead oxide, and as vulcanization accelerator may be used N-cylohexyl-benzothiazyl sulfenamide, N-oxydiethylene-benzothiazyl sulfenamide, N-tertiary-buthyl-2-benzothiazyl

sulfenamide, sodium dimethyl dithiocarbamate, sodium diethyl dithiocarbamate, hexamethylenetetramine, potassium dimethyl dithiocarbamate, sodium dibutyl dithiocarbamate, zinc dimethyl dithiocarbamate, zinc diethyl dithiocarbamate, zinc ethylphenyl dithiocarbamate, copper dimethyl dithiocarbamate, selenium diethyl dithiocarbamate, tellurium diethyl dithiocarbamate, diphenylguanidine, di-tolylguanidine, thiocarbanilide and ditolylthiourea.

The amount of the valucanization-activator or accelerator used is 0.01 to 10 parts, preferably 0.05 to 5 parts by weight, more preferably 0.1 to 3 parts by weight per 100 parts by weight of the resin mixture of the polyphenylene oxide and styrene polymer.

Further, the addition of rubber-like polymers is desirable to improve the impact strength of the graft copolymer. Examples of such polymers include butadiene rubber, styrene-butadiene copolymer rubber, styrene-butadiene block copolymer rubber, isoprene rubber, isobutylene rubber, propylene rubber, ethylene-propylene copolymer rubber, acrylic rubber, polyester rubber, polyamide rubber, urethane rubber, and the like.

These rubber-like polymers are added in amounts similar to those generally used in resin compositions reinforced with rubber-like polymers, the preferred amounts being in the range of 1 to 30 parts by weight for 100 parts by weight of the graft copolymer.

That the graft copolymer produced by the process of this invention contains no ungrafted polyphenylene

oxide can be confirmed by solvent fractionation or by the method reported by A. Factor et al. in J. Polymer Sci., 7B, 205 (1969). According to the report, polyphenylene oxide can be identified by utilizing the phenomenon that polyphenylene oxide becomes insoluble in methylene chloride owing to the formation of a composite adduct between polyphenylene oxide and methylene chloride and the adduct releases methylene chloride on being heated, leaving behind polyphenylene oxide. The graft copolymer obtained by the process of this invention was soluble in methylene chloride, forming a uniform solution which will not deposit insolubles; or even if any deposit was formed on long standing, the deposited polymer, after having been thoroughly washed and dried, was found to contain polystyrene or a styrene polymer which was not separable. This confirms that the graft copolymer contained no ungrafted polyphenylene oxide.

The graft copolymers obtained by the process of this invention comprising a polyphenylene oxide and a styrene polymer and containing no ungrafted polyphenylene oxide have many applications either as such or after blending with other polymers. Examples include blends with styrene polymers such as polystyrene, styrene-acrylonitrile copolymer and styrene-methyl methacrylate copolymer and blends with rubber-modified styrene resins such as, for example, butadiene-base rubber-modified polystyrene and styrene-acrylonitrile copolymer, acryl rubber-modified polystyrene and

styrene-acrylonitrile copolymer, ethylene-propylene copolymer-modified polystyrene, ethylene-methyl methacrylate copolymer-modified polystyrene, and butadiene-base rubber-modified sytrene-methyl methacrylate copolymer. Such blends can be further incorporated with inorganic fillers such as glass fiber, carbon fiber, carbon black, titanium white, silica and calcium carbonate, various polymers, plasticizers, flame retardants, pigments, etc.

The invention is illustrated below in detail with reference to Examples, but the invention is not limited thereto.

Examples 1 to 5

Mixtures were each prepared from 16 g of poly-(2,6-dimethyl-1,4-phenylene oxide) having an intrinsic viscosity [η] of 0.55 dl/g (at 25°C in chloroform), 24 g of a polystyrene ("Esbrite", a trademark of Nippon Polystyrene Co.) and 0.12 g of a grafting agent shown in Table 1. Each mixture was melt-blended at 250°C for 10 minutes in a Brabender plastograph at 50 rpm. A 2.0 g portion of the reaction mixture was dissolved in 40 ml of methylene chloride and allowed to stand for 3 hours. The precipitate, if any, was collected by filtration, washed with methylene chloride, then with methanol, and dried under reduced pressure at 120°C for 4 hours to obtain a polymer. The polystyrene content of the polymer was determined by infrared absorption spectroscopy. The results obtained are shown in Table 1.

Comparative Example 1

In this Comparative Example, for the purpose of comparison the procedure in Example 1 was repeated, except that no sulfur compound was used. The results obtained are shown in Table 1.

Table 1

| | Grafting agent | | Percent precipitated (by weight) | Polystyrene content of precipitate (% by weight) |
|---|---|---|---|---|
| | Type | Added amount (PHR*) | | |
| Example 1 | Sulfur | 0.5 | 0 | - |
| " 2 | Tetramethylthiuram sulfide | 2 | 0 | - |
| " 3 | Morpholindisulfide | 1.5 | 0 | - |
| " 4 | Butandithiol | 1.0 | 0 | - |
| " 5 | Sulfur<br>Tetramethylthiuram sulfide | 0.3<br>1.0 | 0 | - |
| Comparative Example 1 | None | - | 38.4 | ≒0 |

Note; *PHR: Part by weight per 100 parts by weight of the resin mixture.

1 As is apparent from Table 1, in Examples 1 to 5, where grafting was carried out according to this invention, no precipitation from methylene chloride was observed, indicating that polyphenylene oxide had been completely transformed into a graft copolymer, leaving no unreacted polymer. Conversely, almost all the polyphenylene oxide initially present in the reaction system had been precipitated in Comparative Example 1, where the resin mixture was simply melt-blended without the addition of a sulfur compound, and where a peroxide was added as sole additive. This indicates that substantially no grafting took place.

Example 6 and Comparative Example 2

A mixture was prepared by dry-blending 400 g of poly(2,6-dimethyl-1,4-phenyleneoxide) as used in Example 1, 600 g of an acrylonitrile-styrene copolymer ("Cevian" NJD, a trademark of Daicel Ltd.), 5 g of sulfur and 10 g of tetramethylthiuram sulfide. The mixture was melt-blended at 250°C in a 30-mm ø extruder to carry out the grafting reaction. The retention time was about 5 minutes. In Comparative Example 2 the above-outlined procedure was repeated, except that sulfur and tetramethylthiuram sulfide were not used.

Both of the above-mentioned melt-blended products were compression molded by means of a hot press at 230°C under a load of 100 kg to prepare pressed sheets, 3 mm in thickness. The sheet obtained in Comparative Example 2 showed a tinge of opacity, whereas the sheet obtained in Example 6 was completely transparent, indicating that the grafting had taken place.

To each 500 g of the melt-blended products

obtained in Example 6 and comparative Example 2 was added 130 g of a polybutadiene-modified polystyrene (40% polybutadiene content). Each material thus obtained was blended in an extruder to obtain a pelletized resin which was injection molded to determine the heat distortion temperature and anisotropy of the molded piece.

For the purpose of expressing the degree of anisotropy, two test specimens were cut out of each injection molded piece, the one being cut along the direction of injection and the other along the cross direction and the test specimens were tested for Izod impact strength.

The results shown in Table 2 are those obtained from the graft copolymer prepared in Example 6 according to this invention and in Comparative Example 2, wherein sulfur and tetramethylthiuram sulfide had not been added.

Table 2

| | Example 6 | Comparative Example 2 |
|---|---|---|
| Heat distortion temperature (°C) load: 18.6 kg/cm$^2$ | 107 | 101 |
| Impact strength (kg. cm/cm) Parallel direction | 24 | 24 |
| Cross direction | 23 | 14 |

From Table 2 it can be seen that the graft copolymer obtained according to this invention has excellent thermal properties and is a molding material exhibiting less anisotropy on being molded.

Examples 7 to 12

Mixtures were each prepared from 25 g of polyphenylene oxide and 25 g of polystyrene as used in Example 1, grafting agent and vulcanization-activator or accelerator as shown in Table 3. Each mixture was melt-blended at 250°C for 5 minutes in a Brabender plastograph. The amount of precipitate in percent was determined in the same manner as in Example 1.

The results obtained are shown in Table 3. From Table 3 it is apparent that when a vulcanization-activator or accelerator is used, the amount of sulfur compound used is smaller.

Table 3

| | Sulfur Compound | | Vulcanization-activator or accelerator | | Amount of precipitate (% by weight) |
|---|---|---|---|---|---|
| | Type | Added amount (PHR) | Type | Added amount (PHR) | |
| Example 7 | Tetramethyl-thiuram disulfide | 0.1 | None | - | 12.1 |
| " 8 | " | 0.1 | Zinc oxide | 0.1 | 0 |
| " 9 | sulfur | 0.3 | None | - | 7.3 |
| " 10 | " | 0.3 | Stearic acid | 0.5 | 0 |
| " 11 | " | 0.3 | Zinc oxide | 0.5 | 0 |
| " 12 | " | 0.3 | Lead oxide | 0.5 | 0 |
| " 13 | P-Amyl phenolsulfur dichloride condensation product | 0.5 | Zinc oxide | 0.5 | 0 |

WHAT IS CLAIMED IS:

1. A process for producing a graft copolymer, which comprises melt-blending 100 parts by weight of a resin mixture comprising 90 to 10% by weight of a polyphenylene oxide having a unit structure of the formula I

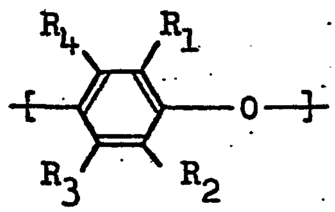

(I)

(wherein $R_1$, $R_2$, $R_3$ and $R_4$ each represents hydrogen, a halogen atom, a hydrocarbon or substituted hydrocarbon radical) and 10 to 90% by weight of a styrene polymer in the presence of 0.01 to 5 parts by weight of a grafting agent selected from the group consisting of sulfur, sulfur halogenides, sulfides, thiols and thiophenols.

2. A process according to Claim 1, wherein the resin mixture comprising 25 to 75% by weight of a polyphenylene oxide and 75 to 25% by weight of a styrene polymer is melt-blended.

3. A process according to Claim 1, wherein the polyphenylene oxide is a member selected from the group consisting of poly(2,6-dimethyl-1,4-phenylene oxide), poly(2-methyl-1,4-phenylene oxide), poly(3-methyl-1,4-phenylene oxide), poly(2,6-diethyl-1,4-phenylene oxide), poly(2,6-dipropyl-1,4-phenylene oxide), poly(2-methyl-6-allyl-1,4-phenylene oxide), poly(2,6-dichloromethyl-1,4-phenylene oxide), poly(2,3,6-trimethyl-1,4-phenylene

oxide), poly(2,3,5,6-tetramethyl-1,4-phenylene oxide), poly(2,6-dichloro-1,4-phenylene oxide), poly(2,6-diphenyl-1,4-phenylene oxide), and poly(2,5-dimethyl-1,4-phenylene oxide).

4. A process according to Claim 1, wherein the styrene polymer is a polymer of an aromatic alkenyl compound selected from the group consisting of styrene, chlorostyrene, dichlorostyrene, p-methoxystyrene, p-nitrostyrene, p-methylstyrene, p-phenylstyrene, p-acetoxystyrene, p-hydroxystyrene, m-hydroxystyrene, p-divinylbenzene, aminostyrene, chloromethylstyrene, α-methylstyrene, and methoxystyrene.

5. A process according to Claim 1, wherein the styrene polymer is a copolymer of an aromatic alkenyl compound with ethylene, propylene, vinyl chloride, methyl methacrylate, methyl acrylate, acrylonitrile, butadiene, isoprene, maleic anhydride, isobutylene or vinyl acetate.

6. A process according to Claim 1, wherein the grafting agent is a member selected from the group consisting of sulfur, sulfur monochloride, sulfur dichloride, 4,4'-thio-bis-(6-t-butyl-2-methyl phenol), 4,4'-thio-bis-(2-methyl phenol), 2,2'-thio-bis-(6-t-octyl-4-methyl phenol), tetramethylthiuram monosulfide and di-pentamethylenethiuram monosulfide, morpholine disulfide, tetramethylthiuram disulfide,

tetraethylthiuram disulfide, tetrabutylthiuram disulfide, dimethyldiphenylthiuram disulfide, a $C_1$ - $C_{12}$ alkyl phenol disulfide, dipentamethylenethiuram disulfide, dibutyl xantogen disulfide, 0,0'-dibenzamide diphenyl disulfide, dibenzothiazyl disulfide, dithio-bis(nitrobenzoic acid), dithiodipyridine, dithiobenzoic acid, cysteine, dipentamethylenethiuram tetrasulfide, ethane dithiol, propane dithiol, butane dithiol, cysteine, mercaptobenzoimidazol, mercaptobenzothiazol, mercaptothiazoline, and metal salts thereof, pentachloro thiophenol, thiophenol, and metal salts thereof.

7. A process according to Claim 1, wherein a rubber-like polymer is added to the resin mixture in an amount of 1 to 30 parts by weight per 100 parts by weight of the resin mixture.

8. A process according to claim 7, wherein the rubber-like polymer is a member selected from the group consisting of a butadiene rubber, styrene-butadiene copolymer rubber, styrene-butadiene block copolymer rubber, isoprene rubber, propylene rubber, ethylene-propylene copolymer rubber, acrylic rubber, polyester rubber, polyamide rubber and urethane rubber.

9. A process according to Claim 1, wherein a vulcanization-activator or accelerator is added to the resin mixture in an amount of 0.01 to 10 parts by weight per 100 parts by weight of the resin mixture.

10. A process according to any of Claims 1 to 9, wherein the temperature of melt-blending is 130° to 300°C.

0017751

Application number

European Patent Office

# EUROPEAN SEARCH REPORT

EP 80101180.0

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | US - A - 3 767 730 (S. NAKASHIO et al.)<br>+ Totality +<br>-- | 1-5,7,8 | C 08 G 81/02<br>C 08 L 71/04<br>C 08 L 25/04<br>C 08 L 25/16<br>C 08 K 3/06<br>C 08 K 3/30<br>C 08 K 3/36<br>C 08 K 5/37<br>C 08 K 5/38<br>C 08 K 5/40<br>C 08 K 5/43<br>C 08 K 5/47 |
| | DE - B2 - 1 694 272 (GENERAL ELECTRIC CO.)<br>+ Examples +<br>-- | 1-3,5-9 | |
| | US - A - 4 097 556 (K. TOYAMA et al.)<br>+ Totality +<br>---- | 1-5,7,8 | TECHNICAL FIELDS SEARCHED (Int.Cl. 3)<br>C 08 G 81/00<br>C 08 L 71/00<br>C 08 K |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| 04-06-1980 | 04-06-1980 | KALTENEGGER |

EPO Form 1503.1 06.78